# FASCICULE DE BREVET EUROPEEN

(11) **EP 3 929 006 B1**
(45) Date de publication et mention de la délivrance du brevet: **02.11.2022**
(21) Numéro de dépôt: 21175844.6
(22) Date de dépôt: 26.05.2021
(51) Int. Cl.: B60C 23/04

(54) **PROCEDE ET DISPOSITIF D'ESTIMATION DE L'ÉTAT OU DE LA PRESSION DES PNEUS D'UN AERONEF**
VERFAHREN UND VORRICHTUNG ZUM ABSCHÄTZEN DES ZUSTANDS ODER DES DRUCKS DER REIFEN EINES LUFTFAHRZEUGS
METHOD AND DEVICE FOR ESTIMATING THE STATE OR THE PRESSURE OF THE TYRES OF AN AIRCRAFT

(30) Priorité: 26.06.2020 FR 2006759
(43) Date de publication de la demande: 29.12.2021
(73) Titulaire: AIRBUS OPERATIONS (S.A.S.), 31060 Toulouse (FR); Airbus Operations Limited, Bristol BS34 7PA (GB)
(72) Inventeur: SILVEIRA FREIXO, Cassiano, 31060 TOULOUSE (FR); PARSONS, Stephen, BRISTOL, BS34 7PA (GB); GHRIB, Meriem, 31060 TOULOUSE (FR)
(74) Mandataire: Sarraméa, Claude

(56) Documents cités:
- WO-A1-02/47977
- WO-A1-2019/081746
- CN-B- 107 379 899

## Description

L'invention est relative à l'estimation et/ou à la prévision de l'état ou de la pression des pneus d'un aéronef, par exemple un avion.

Les réglementations aéronautiques imposent que la pression des pneus des trains d'atterrissage des aéronefs doit être contrôlée régulièrement. Pour les vols long courrier, ces vérifications sont exécutées lors des escales sur les aéroports, entre deux vols. Par exemple, pour certains types d'avions longs courriers, la pression des pneus doit être vérifiée au moins toutes les 36 heures.

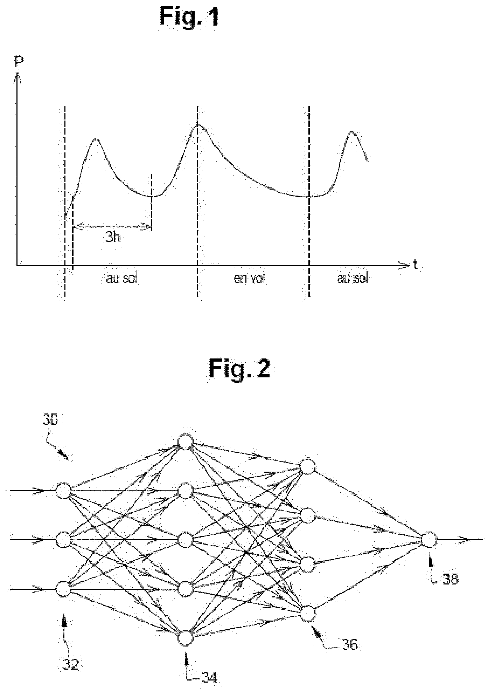

Les règlementations imposent généralement qu'une mesure de pression de pneu soit réalisée au moins trois heures après le dernier mouvement de la roue équipée dudit pneu, soit 3 heures après le dernier mouvement des roues, afin que la température de l'air dans le pneu soit stabilisée et par conséquent que la valeur de la pression soit stabilisée (voir figure 1). Ce besoin de stabilisation représente une contrainte opérationnelle importante pour les opérateurs.

Une solution existante consiste à ajouter un capteur de température fixé à l'intérieur dudit pneu, pour fournir une estimation de la température du gaz à l'intérieur du pneu et corriger la pression du gaz mesurée. Néanmoins, cette alternative ajoute des coûts importants, principalement pour les aéronefs existants, et une source additionnel de panne potentiel impactant la fiabilité de l'appareil.

Les avions courts ou moyens courriers effectuent généralement plusieurs vols chaque jour, puis ils restent stationnés sur un aéroport pendant la nuit. Cela permet de réaliser des opérations de maintenance pendant la nuit, dont la mesure de pression des pneus, sans impacter le temps entre deux vols consécutifs (TAT pour « Turn Around Time » en anglais).

Les avions longs courriers effectuent des vols de longue durée et par conséquent ils ne restent habituellement pas stationnés la nuit sur un aéroport entre deux vols consécutifs. Lorsque la pression des pneus doit être vérifiée, la mesure de pression doit alors être réalisée lors d'une escale au sol, pendant le temps entre deux vols consécutifs. Dans certains cas, la contrainte, indiquée ci-dessus, de devoir attendre au moins trois heures après le dernier mouvement de roue pour pouvoir réaliser la mesure de pression peut avoir pour effet de nécessiter un allongement du temps entre deux vols consécutifs. Par exemple, si le temps prévu entre les deux vols n'était que de deux heures, il doit être allongé d'une heure plus la durée nécessaire à la vérification de la pression des pneus. Cela est pénalisant pour la compagnie aérienne exploitant l'avion. En effet, la rentabilité d'un avion pour une compagnie aérienne est d'autant moins importante que cet avion reste au sol.

Il serait donc souhaitable de trouver une solution permettant de vérifier la pression des pneus d'un avion pendant une escale, sans l'immobiliser au sol trop longtemps.

Une autre problématique se pose: en effet, il peut arriver qu'il faille changer un pneu du fait de sa porosité. Dans ce cas de figure, l'aéroport doit disposer des pièces de rechange et de l'équipement nécessaire pour effectuer ce remplacement. Là encore, il serait souhaitable de trouver une solution permettant non seulement de vérifier la pression des pneus pendant une escale mais encore d'anticiper un changement de pneu pour éviter d'immobiliser l'avion au sol trop longtemps.

Une solution envisagée par l'inventeur pourrait consister à ajouter un capteur de température à chaque roue de l'avion, de façon à déterminer la température de la masse d'air à l'intérieur du pneu. Cela permettrait de corriger la valeur de pression mesurée. Toutefois, l'ajout d'un capteur de température et du système de mesure associé aurait pour effet d'accroître la masse de l'aéronef, ce que l'on souhaite éviter pour des raisons d'économie de carburant. De plus, une telle solution serait coûteuse pour des avions déjà en service, lesquels ne sont pas équipés de tels capteurs de température.

Le document WO2019/081746 décrit un procédé de détermination d'une pression de gonflage attendue dans un pneumatique d'aéronef muni d'un capteur de pression et de température ainsi qu'un procédé d'aide à la maintenance.

Un procédé de détermination d'une pression de gonflage attendue dans un pneumatique d'aéronef muni d'un capteur de pression comprenant un réseau neuronal est connu du document CN107379899.

Enfin, le document WO02/47977 divulgue un dispositif de commande de la décélération d'un aéronef en phase de roulement sur une piste d'atterrissage comprenant un réseau neuronal.

L'invention concerne d'abord un procédé d'estimation de l'état ou de la pression d'un pneu d'aéronef selon la revendication 1.

Selon une réalisation de l'invention, les 3 instants t₁, t₂, t₃ correspondent à un même état d'arrêt continu des moteurs de l'aéronef.

Par exemple, t₁ et t₂ peuvent être séparés d'une durée comprise entre 5 mn et 15 mn et/ou t₁ et t₃ peuvent être séparés d'au moins lh ou même de 3h.

L'invention permet donc, notamment, d'estimer la pression, ou un statut représentatif de la pression, d'un pneu à un instant correspondant à un temps d'attente qui peut être par exemple de une ou plusieurs heures, par exemple 3h, après le dernier mouvement de roue d'un aéronef qui vient d'atterrir.

Selon une réalisation de l'invention, l'instant t₂ peut être antérieur à l'instant auquel la pression du pneu est maximum et/ou l'instant t₃ peut être postérieur à l'instant auquel la pression du pneu est maximum.

Un procédé selon l'invention peut comporter une étape préalable d'apprentissage du modèle sur la base de plusieurs ensembles de données, qui peuvent être associés à n (n>l ; en général : n» 1, par exemple n> 10 ou 20 ou 100) vols antérieurs différents, chaque ensemble i (1< i < n) de données comportant au moins:
- une mesure de pression du pneu, à des instants tᵢ₁, ti₂ ;
- une mesure de la température des freins (BT2) et de la température extérieure (OAT2), aux instants tᵢ₁, ti₂,
- de données de mesure de pression du pneu à un 3^{ème} instant tᵢ₃, postérieur à tᵢ₂, les instants tᵢ₁, tᵢ₂, et tᵢ₃ correspondant à un état d'arrêt continu des moteurs de l'aéronef.

Pour améliorer la précision, les données d'entrée du modèle peuvent en outre comporter une ou des données physiques caractéristiques d'au moins un des paramètres suivants:
- la vitesse moyenne de rotation et/ou le nombre de rotations de la roue, après que l'aéronef ait touché le sol et avant l'arrêt des moteurs de l'aéronef;
- au moins une température extérieure et une pression du pneu en vol;
- au moins une température de la jante sur laquelle le pneu est monté, de préférence à un instant de mesure de la pression du pneu;
- la valeur maximale de la pression du pneu (PPMAX) après le dernier décollage (point P4),
- la valeur de la pression du pneu (PPA) lorsque l'avion passe à, ou en dessous de, une altitude prédéterminée, par exemple 800ft,
- le temps écoulé entre l'instant de mesure de la pression PPMAX et l'instant de mesure de la pression PPA,
- l'utilisation ou non d'un système de refroidissement des freins.

Les instants t₄ et t₅ peuvent être des instants d'un même vol, t₄ correspondant à un état de pression maximum du pneu, après décollage, l'instant t₅ correspondant à un passage de l'aéronef, au cours du même vol, à une, ou en dessous d'une, altitude prédéterminée.

Le 3^{ème} instant (t₃) peut être un instant du vol ultérieur ou après l'atterrissage qui suit ce vol ultérieur. Il est donc possible de réaliser une prédiction ou une anticipation concernant la nécessité, ou pas, d'une maintenance au cours du vol ultérieur ou du prochain vol.

La donnée de sortie représentative de l'état du pneu à un 3^{ème} instant t₃, postérieur au 2^{ème} instant (t₅), peut être produite à l'aide, en outre, de données mesurées au cours de nₚ (nₚ>1, par exemple nₚ =1 ou 2) vols précédents.

Par exemple, ces données mesurées au cours de vols précédents peuvent comporter au moins un état de pression maximum du pneu, après décollage de chacun de ces vols précédents, et un état de pression lors du passage de l'aéronef, au cours de chacun de ces vols précédents, à une, ou en dessous d'une, altitude prédéterminée.

Un procédé selon l'invention peut comporter une étape préalable d'apprentissage du modèle sur la base de plusieurs ensembles de données, associés à au moins 2 vols antérieurs différents (mais en général : n» 1, par exemple n> 10 ou 20 ou 100), chaque ensemble de données comportant au moins:
- une mesure de la pression maximum (PPMAX) du pneu, à un instant t₄, après décollage;
- une mesure de la pression du pneu (PPA) lors d'un passage de l'aéronef, au cours du même vol, à une, ou en dessous d'une, altitude prédéterminée, à un instant t₅,
- et une mesure de la pression du pneu (PPM) après atterrissage consécutif à ce vol, après arrêt des moteurs de l'aéronef, à un instant t₃.

Par exemple, l'instant t₃ est postérieur à l'instant auquel la pression du pneu est maximum, après atterrissage.

L'invention concerne également un dispositif pour l'estimation de l'état ou de la pression d'un pneu d'aéronef selon la revendication 13.

Les indications déjà données ci-dessus, concernant le 1^{er} instant, le 2^{ème} instant et le 3^{ème} instant peuvent s'appliquer également à cette définition du dispositif.

Dans un procédé ou un dispositif selon l'invention, le modèle d'estimation peut être un réseau de neurones, on un modèle de type bayésien naïf ou une machine à vecteurs de support ou un modèle physique.

Les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels:
La figure 1 représente l'évolution de de la pression de pneus en fonction du temps, successivement pendant une phase au sol, après atterrissage, puis en vol, puis de nouveau au sol;
La figure 2 représente un réseau de neurones,
La figure 3 représente un schéma de la phase d'apprentissage d'un modèle dans le cadre d'un procédé selon l'invention,
Les figures 3B et 3C représentent des schémas de la phase d'utilisation d'un modèle dans le cadre d'un procédé selon l'invention,
La figure 4 représente l'évolution de la pression de pneus en fonction du temps, successivement pendant une phase au sol, après atterrissage, puis en vol, puis de nouveau au sol, ainsi que les instants auxquels des mesures sont effectuées pour la mise en œuvre un procédé selon l'invention, de même qu'un instant auquel une estimation de la pression est réalisée à l'aide de l'invention;
La figure 5A représente un schéma de la phase d'apprentissage d'un modèle dans le cadre d'un autre procédé selon l'invention,
Les figures 5B et 5C représentent des schémas de la phase d'utilisation d'un modèle dans le cadre d'un autre procédé selon l'invention,
Les figures 6 et 7 représentent des moyens d'acquisition et de traitement de données pouvant être utilisés dans le cadre de la présente invention;
La figure 8 représente une partie de train d'atterrissage d'un aéronef.

Dans un premier mode de réalisation, un statut représentatif de la pression, ou de l'état de gonflage, d'un pneu d'un aéronef (par exemple un avion) est estimé ou déterminé, en mettant en œuvre un modèle de classification ou d'estimation, de type « intelligence artificielle» (IA), développé à partir de l'apprentissage des données historiques basé sur des techniques d'IA. Ce modèle est par exemple un réseau de neurones, lequel va être décrit ci-dessous, d'autres exemples de modèles d'estimation étant donnés plus loin. Un tel modèle va permettre de fournir, par exemple, une donnée binaire « 0 » si aucune maintenance du pneu n'est nécessaire, « 1 » si une opération de maintenance à effectuer (par exemple : gonflage du pneu).

Un exemple d'un réseau de neurones 30 est représenté schématiquement sur la figure 2. Les références 32, 34, 36, 38 désignent diverses couches de réseau (par exemple 3 ou 4), dont une couche d'entrée 32, une couche de sortie 38 et diverses couches cachées 34, 36. Ici, on a seulement représenté 2 couches cachées, mais le réseau peut aussi n'en comporter aucune, ou en comporter une seule, ou plus de deux. Dans le cas de la présente invention, c'est la couche de sortie qui fournit par exemple une donnée binaire « 0 » si aucune maintenance du pneu n'est nécessaire, « 1 » si une opération de maintenance à effectuer (par exemple : gonflage du pneu).

Chacune des couches comporte un ensemble de neurones.

Les données d'entrée (données traitées) sont introduites dans les neurones de la couche d'entrée 32. Il s'agit de données qui seront mesurées lors de l'utilisation du modèle.

Dans la présente demande, ces données d'entrée, à un instant t donné, peuvent comporter, selon un 1^{er} exemple, la pression dans le pneu étudié (PP, ou PPi pour une mesure à l'instant tᵢ), la température des freins (BT, ou BTi pour une mesure à l'instant ti) associés à la roue sur laquelle ce pneu est monté et la température extérieure (OAT, ou OATi pour une mesure à l'instant tᵢ).

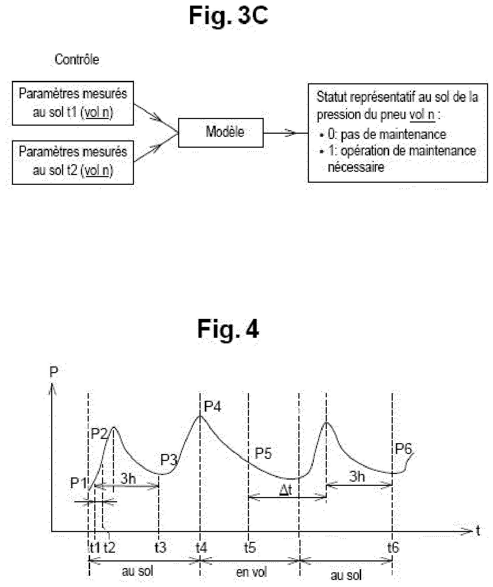

Par exemple, ces mesures sont effectuées à des instants t₁, t₂, postérieurs à un atterrissage, et le système va produire une estimation de l'état de pression PPM du pneu à un instant t₃, postérieur à t₂; par exemple encore, t₁ est un instant postérieur, mais très proche, de l'atterrissage, t₂ est antérieur au maximum de pression dans le pneu après atterrissage (voir courbe de la figure 4), et t₃ est postérieur au maximum de pression dans le pneu après atterrissage. Par exemple, les mesures aux instants t₁ et t₂ sont effectuées alors que les roues de l'avion sont arrêtées et les moteurs sont coupés.

L'intervalle de temps entre t₁ et t₂ est de préférence choisi pour obtenir un écart de mesure significatif. Par exemple, un écart de temps de l'ordre de 5 ou 10 minutes, ou compris entre 5 minutes et 15 minutes est suffisant t₁ et t₂ peuvent tous deux être situés dans un intervalle compris par exemple entre 15 et 20 minutes après l'instant d'atterrissage.

Selon un exemple, t₃ =t₁ + 3h.et t₂ = t₁ + 10 minutes.

On a représenté en figure 4 l'évolution de la pression dans le pneu en fonction du temps, ainsi que des exemples d'instants t₁ et t₂ et un instant ultérieur t₃ auquel on souhaite estimer la pression du pneu.

Selon un 2^{ème} exemple, les données d'entrée peuvent comporter:
- la pression, de préférence la pression maximum PPMAX, du pneu après un décollage;
- la pression PPA lorsque l'avion passe, au cours du même vol, en dessous d'une certaine altitude, par exemple 800 pieds.

Le système va alors produire une estimation des besoins, ou pas, d'intervention sur le pneu après un atterrissage ultérieur.

L'aéronef est donc muni de capteur(s) de pression pour mesurer la pression à l'intérieur du pneu et éventuellement de capteur(s) de température pour permettre de mesurer le(s) paramètre(s) mentionné(s) ci-dessus. De préférence il en va de même pour tous les pneus. Dans un exemple, l'aéronef comporte un capteur de la pression à l'intérieur du pneu (et, de préférence, un capteur de la pression à l'intérieur de chacun des autres pneus), un capteur de température des freins associés à la roue (qui porte le pneu concerné) (et, de préférence, un capteur associé aux freins de chacune des autres roues) et un capteur de température extérieure (air ambiant). Ces trois capteurs peuvent être déjà existants sur l'aéronef.

Comme expliqué ci-dessous, d'autres paramètres peuvent être mesurés, qui vont permettre de renforcer la précision du résultat fourni par le réseau de neurones.

A chaque neurone du réseau correspond une fonction d'activation non linéaire. C'est, par exemple, une fonction tangente hyperbolique ou une fonction sigmoïde, ou Softmax, ou ReLu (« Rectified Linear Unit ») ainsi qu'un seuil d'activation. Le choix de la fonction d'activation et du seuil d'activation pourra être fait en fonction du compromis souhaité entre, d'une part, l'efficacité et la rapidité de l'apprentissage et, d'autre part, la performance du modèle. Cette dernière peut être mesurée par la capacité du modèle à généraliser sur un ensemble de données n'ayant pas été utilisé lors de la phase d'apprentissage. Plusieurs métriques existent pour évaluer un modèle de réseau de neurones. Dans le cas où l'on entraîne un modèle d'estimation, on peut citer, entre autres, la précision, ou le rappel, ou la F-mesure, etc. Chaque neurone i (i=1,....n) de chaque couche est relié aux neurones j (j = 1, ....p) de la couche suivante. La liaison entre un neurone i et un neurone j est pondérée par un poids Pij. Dans une réalisation, des fonctions d'activation de type ReLU sont utilisées pour les couches cachées du réseau et une fonction d'activation de type sigmoïde est utilisée pour la couche de sortie. A chaque neurone sont fournis les résultats des fonctions d'activation des neurones qui lui sont connectés, chaque résultat étant pondéré par le poids Pij correspondant. La sortie d'un neurone est égale à la valeur de la fonction d'activation de ce neurone appliqué à la somme pondérée, par les poids Pij des neurones, des résultats des fonctions d'activation des neurones qui lui sont connectés.

Le réseau représenté en figure 2 est de type ouvert, préféré pour les applications décrites dans la présente demande; en variante, ce peut-être un réseau bouclé, dans lequel une des données de sortie est réutilisée en tant que donnée.

D'autres informations sur les réseaux de neurones peuvent être trouvées par exemple dans l'ouvrage "The elements of statistical learning" (Authors: Trevor Hastie, Robert Tibshirani, Jerome Friedman), Springer Verlag, Springer Series in Statistics, Second Edition, 2009, ISBN 978-0-387-84858-7.

On a décrit ci-dessus la mise en œuvre d'un réseau de neurones. On peut utiliser d'autres systèmes d'estimation, par exemple de type « Naïve Bayes » (ou estimation naïve bayésienne) ou « Support Vector Machine » (ou machines à vecteurs de support), sachant que l'on souhaite un classifieur, ou une fonction de discrimination, dont la capacité de généralisation (qualité de prévision) est la plus grande possible; concernant les 2 systèmes d'estimation évoqués ci-dessus:
- Un classifieur bayésien naïf est un type de classifieur probabiliste basé sur le théorème de Bayes avec l'hypothèse d'une forte indépendance entres les descripteurs (« features »). L'avantage de ce classifieur est qu'il requiert relativement peu de données d'entraînement pour estimer les paramètres nécessaires à l'estimation, à savoir moyennes et variances des différents descripteurs. Un tel classifieur bayésiens naïf peut être entraîné efficacement dans le cadre d'un apprentissage supervisé. L'estimation des paramètres pour de tels modèles peut reposer sur le maximum de vraisemblance;
- un algorithme d'apprentissage de type « Support Vector Machines » (également appelé « Séparateur à Vaste Marge » (SVM)), est basés, dans le cas de la discrimination d'une variable dichotomique, sur la recherche de l'hyperplan de marge optimale qui, lorsque c'est possible, classe ou sépare correctement les données tout en étant le plus éloigné possible de toutes les observations.

Des aspects concernant ces autres systèmes d'estimation sont présentés dans l'ouvrage "The elements of statistical learning" (Authors: Trevor Hastie, Robert Tibshirani, Jerome Friedman), déjà mentionné ci-dessus.

Pour ces autres systèmes d'estimation, on utilise les données d'entrée mentionnées ci-dessus dans le cas d'un réseau de neurones, et le système produit le même résultat en sortie.

Le résultat fourni par les modèles d'estimation mentionnés ci-dessus est la classe d'appartenance de l'observation (c'est à dire, ici, la classe "0" ou "1"). Chaque modèle a ses propres performances de prédiction /ou de généralisation.

Dans un deuxième mode de réalisation, l'unité de traitement détermine un statut représentatif de la pression du pneu à l'instant souhaité par calcul, en utilisant un modèle physique prédéterminé.

Un tel modèle physique peut être basé sur les équations de la thermique; il permet de calculer la pression du pneu en fonction de ses caractéristiques intrinsèques (matériau, dimensions, ...) et des caractéristiques extérieures (température de l'air, vitesse du pneu à l'atterrissage, ...). De telles équations sont par exemple présentés dans « Computational Fluid Mechanics and Heat Transfer » (« Computational and Physical Processes in Mechanics and Thermal Sciences » (John C. Tannehill, Richard H. Pletcher), 2011, (ISBN-10 : 1591690374) ou « Heat Transfer: A Basic Approach » (M. Necati Ozisik), 1984, (ISBN-13 : 978-0070479821). Il est aussi possible de développer un modèle thermique éventuellement validé par des données mesurées pendant des vols ou des tests.

Le développement d'un modèle thermique, éventuellement validé par des données mesurées pendant des vols ou des tests, peut être suivi des étapes suivantes:
- une étape de variation des paramètres de manière indépendante les uns des autres pour identifier l'influence de chacun d'entre eux;
- une éventuelle étape de combinaison de ces paramètres afin d'identifier de manière plus fine comment la pression évolue en fonction du temps;
- sur la base des étapes ci-dessus, un modèle mathématique peut être créé et mis en œuvre sur un vol (par exemple 10 minutes après un atterrissage).

Des tests physiques peuvent être effectués, puis un modèle mathématique peut être développé, comme pour le modèle thermique mentionné ci-dessus.

Un premier exemple de mise en œuvre d'un procédé ou d'un dispositif selon l'invention concerne le contrôle de l'état, notamment de la pression, d'un pneu d'un aéronef.

De façon avantageuse, aussi bien dans le premier mode de réalisation que dans le deuxième mode de réalisation, l'unité de traitement peut estimer ou déterminer un statut représentatif de la pression d'un pneu en utilisant des mesures de pression relatives à ce pneu et à au moins un autre pneu de. En effet, sauf endommagement d'un pneu, différents pneus d'un même aéronef sont sensés se dégonfler de façon homogène (à une marge de tolérance près).

De manière plus précise, en l'absence de fuite, la variation de pression des pneus est due à la variation de température. Or selon l'emplacement respectif des roues, les différentes variations de température sur les différents pneus peuvent être similaires ou corrélées. Par conséquent, la variation de pression d'un pneu peut servir d'entrée pour estimer la pression d'un autre pneu dans un emplacement symétriquement opposé.

Par exemple, connaissant les pressions mesurées lors d'escales précédentes de l'aéronef, les variations de pression pour différents pneus peuvent être corrélées entre elles. Une telle consolidation des mesures et des informations relatives à plusieurs pneus permet d'améliorer la précision du statut représentatif des pressions des différents pneus.

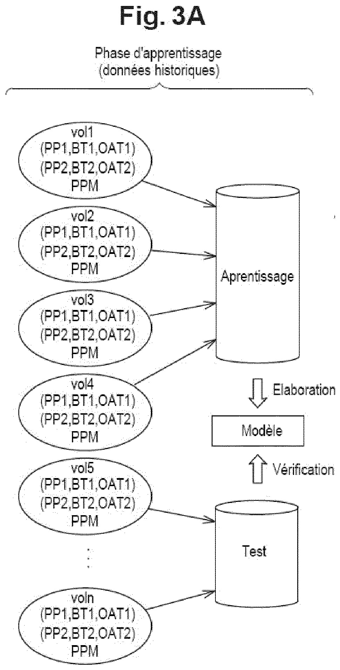

Ainsi, comme illustré en figure 3A, une unité de traitement peut utiliser des mesures réalisées à la suite de vols précédents (vol1, vol2, vol3, ..., voln) d'un aéronef de même type (par exemple des A350); pour chacun de ces vols, les mesures sont effectuées à l'instant t₁ : PP1, BT1, OAT1 (ces paramètres, ainsi que t₁, ont déjà été définis ci-dessus); puis à l'instant t₂ (également déjà défini)>t₁: PP2, BT2, OAT2. Ces mesures permettent d'élaborer un modèle (« Machine learning », ou phase d'apprentissage supervisé, par exemple en utilisant une base des données historique, qui peut comporter des situations où des avions de même type ont séjourné au sol entre deux vol pendant une période donnée, par exemple supérieure à 3h)) de statut représentatif de la pression PPM du pneu à l'instant t₃ ultérieur, par exemple t₃ = t₁+ x h heures (par exemple encore: x compris entre 1 et 3, ou encore x= 3). En fonction des valeurs ((PP1, BT1, OAT1), (PP2, BT2, OAT2), PPM) mesurées suite à chacun de ces vols précédents ainsi que des tâches de maintenance (par exemple: gonflage ou changement de pneu) correspondantes qui ont été réalisées, l'unité de traitement élabore les paramètres du modèle choisi.

Certaines valeurs ((PP1, BT1, OAT1), (PP2, BT2, OAT2)) de vols antérieurs peuvent ne pas être utilisées pour cette phase d'élaboration du modèle, mais être utilisées pour tester la pertinence du modèle en vue de sa validation.

Le modèle élaboré permet ensuite de déterminer, ou d'estimer, pour un vol quelconque, à partir de données mesurées (PP1, BT1, et OAT1; PP2, BT2, et OAT2) après atterrissage, à t₁ et à t₂ (tels que définis ci-dessus), la valeur de la pression dans un pneu à l'instant t₃, postérieur à t₁ et à t₂ par exemple postérieur au maximum de pression du pneu après arrêt des moteurs, par exemple encore à t₁+3h.

Autrement dit, quel que soit le modèle de classification ou d'estimation choisi, un algorithme d'apprentissage (« Machine learning ») permet l'élaboration du modèle à partir des valeurs mesurées ((PP1, BT1, OAT1), (PP2, BT2, OAT2), PP) des différents vols antérieurs (vol1, vol2, vol3, ..., voln); ce modèle peut ensuite être utilisé pour estimer, à partir de mesures effectuées aux instants t₁ et à t₂ (tels que définis ci-dessus):
- la valeur de la pression dans le pneu à l'instant t₃ (lui aussi défini ci-dessus), postérieur à t₁ et à t₂;
- et/ou une donnée de sortie qui indique si une opération de maintenance doit être effectuée ou non.

Comme déjà expliqué ci-dessus, la donnée de sortie du modèle peut être de type binaire (« 0 » : pas de maintenance; « 1 » : opération de maintenance à effectuer). Un état intermédiaire peut être produit par le modèle en cas d'opération de maintenance à effectuer: opération nécessitant un regonflage et opération nécessitant le changement de pneumatique.

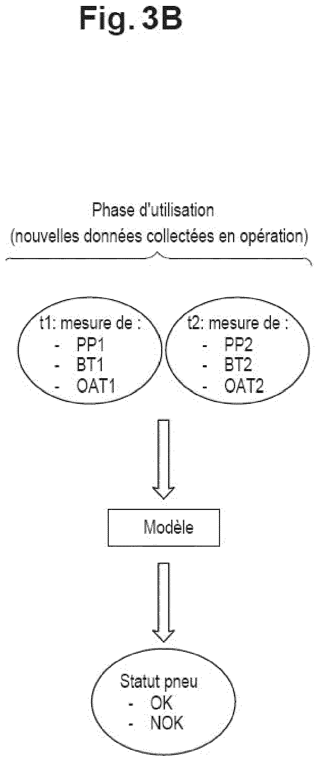

Donc, une fois le modèle réalisé et éventuellement consolidé (figure 3A), il peut être mis en exploitation et utilisé pour estimer le statut représentatif de la pression des pneus PP, x heures (par exemple : x =3) après le dernier mouvement de roue. C'est ce qui est représenté de manière schématique en figures 3B et 3C.

Ainsi, dès que l'aéronef arrête ses moteurs (instant t₁), une première mesure PP1 de la pression du pneu, de la température BT1 des freins et de la température extérieure OAT1 est effectuée. A l'instant ultérieur t₂, situé après t₁ dans la partie croissante de la courbe qui traduit l'évolution de la pression fonction du temps (figure 4), une deuxième mesure des mêmes paramètres est effectuée (PP2, BT2, OAT2).

Ces mesures alimentent le modèle qui produit une estimation de la pression du pneu; en variante c'est un statut représentatif de la pression du pneu qui est produit, par exemple:
A - la pression du pneu est « ok » (si la pression estimée à t₃ est supérieure à un seuil donné): aucune action de maintenance n'est alors à prévoir;
B - la pression du pneu n'est pas « ok » (si la pression estimée à t₃ heures est inférieure à un seuil donné): une action de maintenance est alors à prévoir.

Il peut être en effet plus avantageux d'indiquer au pilote ou au personnel de maintenance un état d'opérabilité du pneu (état « ok » ou état « non ok ») plutôt que la valeur de la pression en elle-même.

Selon une variante, le modèle peut produire l'état « A » ci-dessus et les états B1 et B2 ci-dessous:
B1 - la pression du pneu n'est pas « ok » (si la pression estimée à t₃ est inférieure à un seuil donné): une action de maintenance est alors à prévoir, mais le pneu nécessite uniquement un regonflage (il présente une légère perte de pression qu'un simple regonflage devrait solutionner);
B2 - la pression du pneu n'est pas « ok » (si la pression estimée à t₃ est inférieure à un seuil donné): une action de maintenance est alors à prévoir, mais le pneu doit être changé (par exemple : la pression est trop basse et indique que le pneu est poreux).

Les paramètres mesurés choisis (PP: pression ; BT : température des freins ; OAT : température extérieure) sont représentatifs du type d'atterrissage effectué (par exemple : atterrissage dur nécessitant un fort freinage), ces paramètres influençant la pression dans le pneu. D'autres jeux de paramètres peuvent être sélectionnés, en fonction de leur disponibilité dans un avion. Par exemple, si la mesure de la température des jantes est disponible (à l'aide de capteur(s) de mesure de ces/cette température(s)), par exemple aux mêmes instants que les mesures de pression du ou des pneus correspondant(s), elle peut aussi être intégré comme paramètre d'entrée, ensemble avec (PP, BT, OAT).

Il est possible d'utiliser un ou plusieurs autres paramètres additionnels, qui vont permettre de renforcer la précision du résultat, par exemple:
- la vitesse moyenne de rotation de la roue après avoir touché le sol et avant l'arrêt moteur,
- et/ou le nombre de rotations de la roue, entre l'instant où elle a touché le sol et le moment de son arrêt;
- et/ou la température extérieure et la pression du pneu en vol (par exemple à la fin de la phase de croisière);
- et/ou la valeur maximale de la pression du pneu après le dernier décollage (PPMAX) (point P4, instant t₄ en figure 4),
- et/ou la valeur de la pression du pneu lorsque l'avion passe en dessous des 800 pieds (début de la phase d'approche, avant l'atterrissage) (PPA) (point P5, instant t₅ en figure 4),
- et/ou le temps écoulé entre t₄ et t₅,
- et/ou l'utilisation ou non d'un système de refroidissement des freins (information binaire).

En mettant en œuvre un procédé tel que décrit ci-dessus, il n'est plus nécessaire d'attendre par exemple 3 heures pour mesurer la pression du pneu: le modèle indique directement, à environ t₂, par exemple 10 minutes seulement après l'arrêt des moteurs, si le pneu est dégonflé ou non et s'il faut réaliser une opération de maintenance. Ceci permet aux compagnies aériennes de raccourcir la durée où l'avion est au sol et d'effectuer plus de rotations avec leurs avions.

Le procédé décrit ci-dessus permet de mettre en œuvre les étapes représentées en figure 3C: à l'issue d'un vol de l'aéronef (« vol n »), des mesures de paramètres sont effectuées aux instants t₁ et t₂ ; le modèle élaboré préalablement permet d'estimer l'état du pneu en fonction de la pression estimée à l'instant ultérieur t₃.

Un deuxième exemple de mise en œuvre un procédé ou d'un dispositif selon l'invention concerne l'anticipation d'une opération de maintenance d'un pneu d'un aéronef. On peut mettre en œuvre cette anticipation d'opération de maintenance et le contrôle de l'état comme décrit dans le cadre du premier exemple.

En effet, le procédé décrit ci-dessus permet de raccourcir la durée pendant laquelle l'avion reste au sol, mais il ne permet pas d'anticiper une opération de maintenance sur le pneu puisque le résultat de l'estimation concerne le vol présent. En conséquence, si le pneu nécessite une opération de maintenance simple (gonflage) ou lourde (changement de pneu), l'avion peut être amené à être cloué au sol pendant plus de temps qu'initialement prévu, entraînant de ce fait un retard préjudiciable à la compagnie aérienne et aux passagers.

Ainsi, selon le deuxième exemple de mise en œuvre de l'invention, l'unité de traitement, qui peut mettre en œuvre l'un des modèles déjà mentionnés ci-dessus (réseau de neurones; systèmes d'estimation, par exemple algorithme de type « Naïve Bayes » ou « Support Vector Machine »), peut produire une information de prédiction, relative à un instant (nombre de vols de l'avion ou bien nombre d'heures de vol) auquel un regonflage du pneu ou un changement de pneumatique sera nécessaire.

Cette information permet aux équipes de maintenance de la compagnie aérienne d'anticiper le regonflage du pneu ou le changement de pneu avant que celui-ci soit indispensable, en profitant d'une escale au cours de laquelle le temps entre deux vols (TAT) est plus élevé ou d'une escale sur un aéroport sur lequel la compagnie aérienne dispose d'une base de maintenance.

Une telle anticipation évite de devoir allonger le temps à terre d'une escale ultérieure pour exécuter une action de maintenance suite à une alerte de pression insuffisante du pneu.

Le calcul de l'estimation de la pression du pneu peut être réalisé à bord de l'avion, ou bien au sol, ou encore à la fois à bord de l'avion et au sol. Lorsque l'estimation est réalisée au sol, cela suppose que les informations issues des capteurs embarqués sur l'avion sont transmises au sol par une liaison de communication de données, à destination d'une unité de traitement, qui peut alors correspondre à un calculateur d'un centre de maintenance de la compagnie aérienne exploitant l'aéronef.

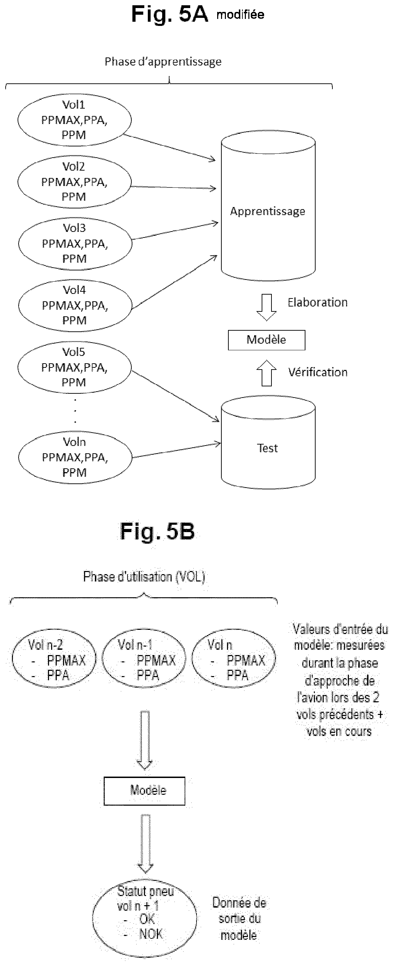

Ainsi, comme illustré en figure 5A, une unité de traitement peut utiliser des mesures réalisées à la suite de vols précédents (vol1, vol2, vol3, ..., voln) d'un aéronef de même type (par exemple des A350). Au cours de chacun de ces vols, les paramètres PPMAXi, PPAi (déjà définis ci-dessus, pour des mesures effectuées à un instant ti), de même que le paramètre PPMi (après atterrissage à la suite du vol concerné), sont mesurés ou estimés pour élaborer un modèle (phase d'apprentissage) de statut du pneu ainsi que des tâches de maintenance (gonflage ou pas) associées à ces vols précédents et à ces mesures précédentes. L'unité de traitement élabore un modèle permettant de déterminer, ou d'estimer, à partir des données (PPMAX, PPA) mesurées au cours du vol n et éventuellement d'un ou plusieurs vols précédents (vols n-1, n-2, etc), le statut du pneu au cours du vol n+1.

Certaines valeurs (en figure 5A, il s'agit des données des vols 5 à n) ne sont pas utilisées pour cette phase d'élaboration du modèle, elles seront utilisées pour tester la pertinence du modèle en vue de sa validation.

Les algorithmes d'apprentissage déjà présenté ci-dessus permettent l'élaboration du modèle à partir des valeurs mesurées des différents vols antérieurs (vol1, vol2, vol3, ..., voln).

Comme déjà expliqué ci-dessus, la donnée de sortie du modèle peut être de type binaire (« 0 » : pas de maintenance; « 1 » : opération de maintenance à effectuer). Un état intermédiaire peut être produit par le modèle en cas d'opération de maintenance à effectuer: opération nécessitant un regonflage et opération nécessitant le changement de pneumatique.

Une fois le modèle réalisé et consolidé, il peut être mis en exploitation et utilisé pour estimer le statut représentatif des pneus.

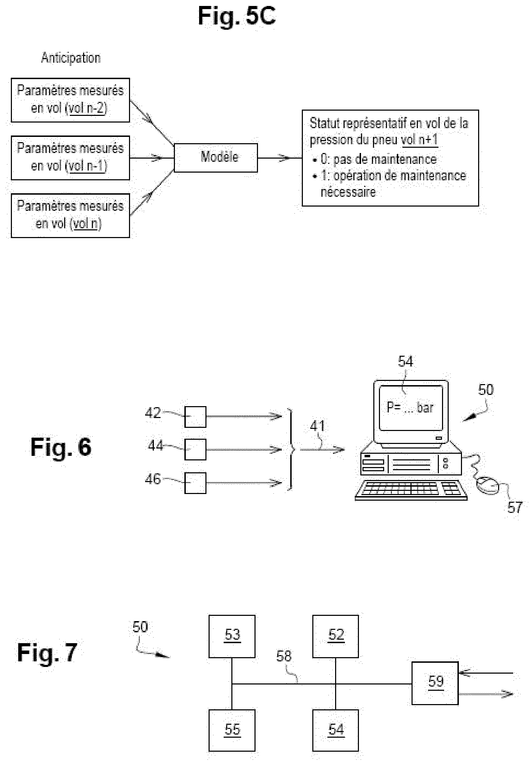

Lors de l'utilisation, le modèle est alimenté par des valeurs mesurées (PPMAX, PPA par exemple) à des instants t₄ et t₅ (figure 4). Ces paramètres peuvent être mesurés au cours de n vols avant l'atterrissage ciblé, par exemple : n=2. Sur la base de ces mesures, le modèle établi une donnée de sortie qui indique si une opération de maintenance doit être effectuée ou non à la fin du prochain vol (anticipation). C'est ce qui est représenté de manière schématique en figures 5B et 5C.

Ainsi, dès que l'avion a décollé (instant t₄ en figure 4), une première mesure de la pression du pneu est effectuée.

Puis, au cours du même vol, une deuxième mesure est effectuée à l'instant t₅ en figure 4, lorsque l'avion passe en dessous d'une altitude prédéterminée, par exemple en dessous des 800 pieds.

À partir de ces mesures, le modèle produit une donnée de sortie pour le vol suivant, comme expliqué ci-dessus.

Comme déjà indiqué ci-dessus, on peut mettre en œuvre cette anticipation d'opération de maintenance et le contrôle de l'état comme décrit dans le cadre du premier exemple, ainsi il est possible:
comme expliqué ci-dessus : d'effectuer une prédiction de la pression à l'instant t₃ d'un vol « n » en utilisant les mesures issues du même appareil dans les vols n-1, n-2.... (anticipation du besoin de maintenance);
et, en fin du vol « n » : d'estimer la pression à l'instant t₃ (en utilisant les messures du même appareil dans les vols n, n-1, ...).

Le but de l'étape a) est d'anticiper le résultat de l'étape b). Si le résultat de l'étape b) indique que la pression n'est pas bonne, toutes les opérations (de l'avion, du personnel de maintenance) sont déjà prêtes pour l'exécution de la maintenance au moment souhaité.

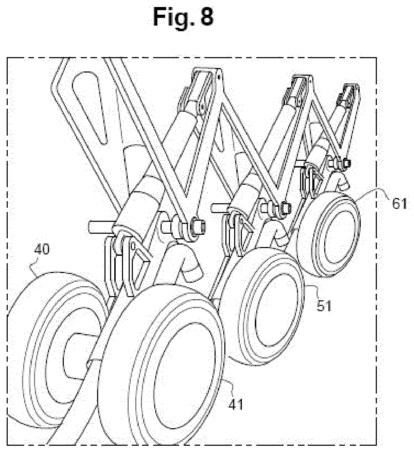

Un train d'atterrissage principal peut comporter plusieurs roues 40, 41,51,61 (figure 8) disposées deux par deux. Il est raisonnable de penser que deux roues (par exemple les roues 41, 51) ayant la même position latérale ont le même comportement. Dans ces conditions, et comme déjà expliqué ci-dessus, les paramètres mesurés sur un autre pneu peuvent aussi être utilisés pour améliorer le modèle, que ce soit dans une optique de contrôle de l'état du pneu ou d'anticipation d'une opération de maintenance. Ainsi, un paramètre comme la différence de pression entre 2 pneus installés en position symétrique pourrait aussi être utilisé pour estimer l'état du pneu correspondant.

Les données mesurées peuvent être traitées par une unité de traitement, de l'aéronef (par exemple : une carte électronique dédiée à la fonction d'estimation de pression ou bien à un calculateur (par exemple un ordinateur ou un micro-ordinateur), de l'aéronef) ou bien par un calculateur (par exemple : un ordinateur, ou un micro-ordinateur, ou un serveur) qui peut être celui d'un centre de maintenance de la compagnie aérienne exploitant l'aéronef.

Un exemple d'un système 50, 54 pour le traitement des mesures effectuées est représenté sur les figures 6 et 7. Un tel système peut être embarqué à bord d'un aéronef, ou bien être positionné au sol.

Un tel système comporte par exemple des moyens 50, par exemple un ordinateur ou un calculateur ou micro-ordinateur, auquel les données mesurées par les capteurs 42-46 sont transmises via une liaison 41. Selon une réalisation, les moyens 50 comportent (figure 7) un microprocesseur 52, un ensemble de mémoires RAM 53 (pour le stockage de données), une mémoire ROM 55 (pour le stockage d'instructions de programme). Eventuellement, des moyens, par exemple une carte d'acquisition de données 59, transforme les données analogiques fournies par un ou des capteurs en données numériques et met ces données au format requis par les moyens 50. Ces divers éléments sont reliés à un bus 58.

Des dispositifs périphériques (écran ou moyens de visualisation 54, souris 57) permettent un dialogue interactif avec un utilisateur. En particulier, les moyens de visualisation (écran) 54 permettent de fournir à un utilisateur une indication visuelle relative à une pression estimée ou à un instant de gonflage d'un pneu.

Dans les moyens 50, sont chargées les données ou les instructions pour mettre en œuvre un traitement des données selon l'invention, et notamment pour effectuer l'entraînement d'un modèle et/ou pour réaliser un éventuel traitement préalable des données brutes ou directement mesurées, et pour calculer une pression d'un pneu.

Ces données ou instructions pour l'entraînement d'un modèle et/ou pour réaliser un éventuel traitement des données brutes ou physiques peuvent être transférées dans une zone mémoire des moyens 50 à partir de tout support pouvant être lu par un micro-ordinateur ou un ordinateur (par exemple: clé USB, disque dur, mémoire morte ROM, mémoire vive dynamique DRAM ou tout autre type de mémoire RAM, disque optique compact, élément de stockage magnétique ou optique).

## Revendications

1. Procédé d'estimation de l'état ou de la pression d'un pneu d'aéronef, 2. défini en ce que:
- on mesure, au cours d'un même vol et/ou après l'atterrissage qui suit ce vol, des données physiques caractéristiques au moins de la pression (PP1, PPMAX) dans le pneu, à un 1^{er} instant (t₁, t₄) puis à un 2^{ème} instant (t₂, t₅),
- à l'aide au moins de ces données mesurées, on forme des données d'entrée d'un modèle d'estimation, qui fournit au moins une donnée de sortie représentative de l'état du pneu ou de la pression (PPM) dans le pneu à un 3^{ème} instant (t₃), postérieur au 2^{ème} instant (t₂, t₅) et **caractérisé en qu'** on mesure également, à chacun des instants (t₁) et (t₂), au moins la température des freins (BT2) de la roue associée audit pneu et la température extérieure (OAT1).

2. Procédé selon la revendication 1, dans lequel un signal d'alerte est produit si au moins une donnée représentative de la pression au 3^{ème} instant (t₃) est inférieure à une valeur seuil prédéterminée.

3. Procédé selon l'une des revendications 1 ou 2, dans lequel un signal est produit pour indiquer la nécessité d'un regonflage du pneu, ou pour indiquer la nécessité d'un changement du pneu.

4. Procédé selon l'une des revendications 1 à 3, l'instant (t₂) étant antérieur à l'instant auquel la pression du pneu est maximum et/ou l'instant (t₃) étant postérieur à l'instant auquel la pression du pneu est maximum.

5. Procédé selon l'une des revendications 1 à 4, comportant une étape préalable d'apprentissage du modèle d'estimation sur la base de plusieurs ensemble de données, associés à au moins 2 vols antérieurs différents, chaque ensemble de données comportant au moins une mesure de pression dudit pneu et, éventuellement, d'au moins un autre pneu, une mesure de la température des freins (BT2) associés à la roue sur laquelle ledit pneu est monté et, éventuellement, de la température des freins (BT2) associés à la roue sur laquelle ledit au moins un autre pneu est monté, et de la température extérieure (OAT2), à des instants (t₁), (t₂), et de données de mesure de pression du pneu à un 3^{ème} instant (t₃), postérieur à (t₂, t₁), (t₂) et (t₃) correspondant à un état d'arrêt continu des moteurs de l'aéronef.

6. Procédé selon l'une des revendications 1 à 5, dans lequel les données d'entrée du modèle comportent en outre une ou des données physiques caractéristiques d'au moins un des paramètres suivants:
- la vitesse moyenne de rotation et/ou le nombre de rotations de la roue, après que l'aéronef ait touché le sol et avant l'arrêt des moteurs de l'aéronef;
- au moins une température extérieure et une pression du pneu en vol;
- au moins une température de la jante sur laquelle le pneu est monté, de préférence à un instant de mesure de la pression du pneu;
- la valeur maximale de la pression du pneu (PPMAX) après le dernier décollage, au 1^{er} instant (t₄),
- la valeur de la pression du pneu (PPA) au 2^{ème} instant (t₅), qui est celui auquel l'avion passe à, ou en dessous de, une altitude prédéterminée, par exemple 800ft,
- le temps écoulé entre le 1^{er} instant, de mesure de la pression (PPMAX), et le 2^{ème} instant, de mesure de la pression (PPA),
- l'utilisation ou non d'un système de refroidissement des freins.

7. Procédé selon l'une des revendications 1 à 6, le 1^{er} instant (t₄) et 2^{ème} instant (t₅) étant des instants d'un même vol, le 1^{er} instant (t₄) correspondant à un état de pression maximum du pneu, après décollage, le 2^{ème} instant (t₅) correspondant à un passage de l'aéronef, au cours du même vol, à une, ou en dessous d'une, altitude prédéterminée.

8. Procédé selon la revendication 7, le 3^{ème} instant (t₃) étant un instant du vol ultérieur ou de l'atterrissage qui suit ce vol ultérieur.

9. Procédé selon la revendication 7 ou 8, la donnée de sortie représentative de l'état du pneu à un 3^{ème} instant (t₃), postérieur au 2^{ème} instant (t 5), étant produite à l'aide, en outre, de données mesurées au cours de n (n>1) vols précédents.

10. Procédé selon la revendication 9, lesdites données mesurées au cours de n (n>1) vols précédents comportant au moins un état de pression maximum du pneu, après décollage de chacun de ces vols précédents, et un état de pression lors du passage de l'aéronef, au cours de chacun de ces vols précédents, à une, ou en dessous d'une, altitude prédéterminée.

11. Procédé selon l'une des revendications 7 à 10, comportant une étape préalable d'apprentissage du modèle sur la base de plusieurs ensembles de données, associés à au moins 2 vols antérieurs différents, chaque ensemble de données comportant au moins:
- une mesure de la pression maximum (PPMAX) du pneu, au 1^{er} instant (t₄), après décollage;
- une mesure de la pression du pneu (PPA) lors d'un passage de l'aéronef, au cours du même vol, à une, ou en dessous d'une, altitude prédéterminée, au 2^{ème} instant (t₅),
- et une mesure de la pression du pneu (PPM) après atterrissage consécutif à ce vol, après arrêt des moteurs de l'aéronef, au 3^{ème} instant (t₃).

12. Procédé selon la revendication 11, l'instant (t₃) étant postérieur à l'instant auquel la pression du pneu est maximum, après atterrissage.

13. Dispositif pour l'estimation de l'état ou de la pression d'un pneu d'aéronef, comportant :
- au moins un capteur de mesure de la pression (P1, P2) dans le pneu, au cours d'un même vol et/ou après l'atterrissage qui suit ce vol, à un 1^{er} instant (t₁, t₄) puis à un 2^{ème} instant (t₂, t₅),
- des moyens (50), programmés pour, à partir de ces données, former des données d'entrée d'un modèle d'estimation, qui fournit au moins une donnée de sortie représentative de l'état du pneu ou de la pression dans le pneu à un 3^{ème} instant (t₃), postérieur au 2^{ème} instant (t₂, t₅),
**caractérisé en ce qu'**il comporte un capteur d'au moins un des paramètres suivants, utilisé(s) en tant que données d'entrée du modèle d'estimation :
- la vitesse moyenne de rotation et/ou le nombre de rotations de la roue, après que l'aéronef ait touché le sol et avant l'arrêt des moteurs de l'aéronef;
- au moins une mesure de la température extérieure et une mesure de la pression du pneu en vol;
- au moins une température de la jante sur laquelle le pneu est monté, de préférence à un instant de mesure de la pression du pneu;
- la valeur maximale de la pression du pneu (PPMAX) après le dernier décollage,
- la valeur de la pression du pneu (PPA) lorsque l'avion passe en dessous des d'une altitude prédéterminée, par exemple 800ft,
- le temps écoulé entre l'instant de mesure de la pression (PPMAX) et l'instant de mesure de la pression (PPA),
- l'utilisation ou non d'un système de refroidissement des freins.

## Patentansprüche

1. Verfahren zum Abschätzen des Zustands oder des Drucks eines Reifens eines Luftfahrzeugs, definiert durch Folgendes:
- Messen, während eines gleichen Flugs und/oder nach der Landung, die auf diesen Flug folgt, von physischen Daten, die mindestens für den Druck (PP1, PPMAX) in dem Reifen charakteristisch sind, zu einem 1. Zeitpunkt (t₁, t₄) und dann zu einem 2. Zeitpunkt (t₂, t₅),
- mit Hilfe mindestens dieser gemessenen Daten, Bilden von Eingangsdaten für ein Abschätzungsmodell, das mindestens ein Ausgangsdatenelement bereitstellt, das für den Zustand des Reifens oder den Druck (PPM) in dem Reifen zu einem 3. Zeitpunkt (t₃), der später als der 2. Zeitpunkt (t₂, t₅) ist, repräsentativ ist,
und **dadurch gekennzeichnet, dass**
zu jedem der Zeitpunkte (t₁) und (t₂) ferner mindestens die Temperatur der Bremsen (BT2) des Rades, das mit dem Reifen assoziiert ist, und die Außentemperatur (OAT1) gemessen wird.

2. Verfahren nach Anspruch 1, wobei ein Warnsignal erzeugt wird, wenn mindestens ein Datenelement, das für den Druck zu dem 3. Zeitpunkt (t₃) repräsentativ ist, kleiner als ein vorgegebener Schwellenwert ist.

3. Verfahren nach einem der Ansprüche 1 oder 2, wobei ein Signal erzeugt wird, um die Notwendigkeit eines erneuten Aufpumpens des Reifens anzuzeigen oder um die Notwendigkeit eines Reifenwechsels anzuzeigen.

4. Verfahren nach einem der Ansprüche 1 bis 3, wobei der Zeitpunkt (t₂) früher als der Zeitpunkt ist, zu dem der Druck des Reifens maximal ist, und/oder wobei der Zeitpunkt (t₃) später als der Zeitpunkt ist, zu dem der Druck des Reifens maximal ist.

5. Verfahren nach einem der Ansprüche 1 bis 4, umfassend einen Vorabschritt des Trainierens des Abschätzungsmodells basierend auf mehreren Datensätzen, die mit mindestens 2 unterschiedlichen früheren Flügen assoziiert sind, wobei jeder Datensatz mindestens Folgendes umfasst: eine Druckmessung des Reifens und eventuell mindestens eines anderen Reifens, eine Messung der Temperatur der Bremsen (BT2), die mit dem Rad, auf dem der Reifen montiert ist, assoziiert sind, und eventuell der Temperatur der Bremsen (BT2), die mit dem Rad, auf dem der mindestens eine andere Reifen montiert ist, assoziiert sind, und der Außentemperatur (OAT2), zu Zeitpunkten (t₁), (t₂), und auf Druckmessdaten des Reifens zu einem 3. Zeitpunkt (t₃), der später als (t₂, t₁) ist, wobei (t₂) und (t₃) einem Zustand der dauerhaften Abschaltung der Motoren des Luftfahrzeugs entsprechen.

6. Verfahren nach einem der Ansprüche 1 bis 5, wobei die Eingangsdaten des Modells ferner ein oder mehrere physische Daten umfassen, die für mindestens einen der folgenden Parameter charakteristisch sind:
- die mittlere Rotationsgeschwindigkeit und/oder die Anzahl von Rotationen des Rades, nachdem das Luftfahrzeug den Boden berührt hat und vor der Abschaltung der Motoren des Luftfahrzeugs;
- mindestens eine Außentemperatur und einen Druck des Reifens während des Flugs;
- mindestens eine Temperatur der Felge, auf der der Reifen montiert ist, vorzugsweise zu einem Zeitpunkt der Messung des Drucks des Reifens;
- den maximalen Wert des Drucks des Reifens (PPMAX) nach dem letzten Abheben, zu dem 1. Zeitpunkt (t₄),
- den Wert des Drucks des Reifens (PPA) zu dem 2. Zeitpunkt (t₅), welcher derjenige ist, zu dem das Flugzeug eine vorgegebene Höhe, beispielsweise 800 Fuß, erreicht oder unterschreitet,
- die Zeit, die zwischen dem 1. Zeitpunkt, zur Messung des Drucks (PPMAX), und dem 2. Zeitpunkt, zur Messung des Drucks (PPA), verstrichen ist,
- die Verwendung oder Nichtverwendung eines Systems zur Kühlung der Bremsen.

7. Verfahren nach einem der Ansprüche 1 bis 6, wobei der 1. Zeitpunkt (t₄) und der 2. Zeitpunkt (t₅) Zeitpunkte eines gleichen Flugs sind, wobei der 1. Zeitpunkt (t₄) einem Zustand maximalen Drucks des Reifens nach dem Abheben entspricht und der 2. Zeitpunkt (t₅) einem Erreichen oder Unterschreiten einer vorgegebenen Höhe durch das Luftfahrzeug während des gleichen Flugs entspricht.

8. Verfahren nach Anspruch 7, wobei der 3. Zeitpunkt (t₃) ein Zeitpunkt des nachfolgenden Flugs oder nach der Landung, die auf diesen nachfolgenden Flug folgt, ist.

9. Verfahren nach Anspruch 7 oder 8, wobei das Ausgangsdatenelement, das für den Zustand des Reifens zu einem 3. Zeitpunkt (t₃), der später als der 2. Zeitpunkt (t₅) ist, repräsentativ ist, ferner mit Hilfe von Daten erzeugt wird, die während n (n>1) vorhergehenden Flügen erzeugt werden.

10. Verfahren nach Anspruch 9, wobei die Daten, die während n (n>1) vorhergehenden Flügen gemessen werden, mindestens einen Zustand maximalen Drucks des Reifens nach dem Abheben jedes dieser vorhergehenden Flüge und einen Druckzustand während des Erreichens oder Unterschreitens einer vorgegebenen Höhe durch das Luftfahrzeug während jedes dieser vorhergehenden Flüge umfassen.

11. Verfahren nach einem der Ansprüche 7 bis 10, umfassend einen Vorabschritt des Trainierens des Modells basierend auf mehreren Datensätzen, die mit mindestens 2 unterschiedlichen früheren Flügen assoziiert sind, wobei jeder Datensatz mindestens Folgendes umfasst:
- eine Messung des maximalen Drucks (PPMAX) des Reifens zu dem ersten Zeitpunkt (t₄) nach dem Abheben;
- eine Messung des Drucks des Reifens (PPA), während das Luftfahrzeug während eines gleichen Flugs eine vorgegebene Höhe erreicht oder unterschreitet, zu dem 2. Zeitpunkt (t₅),
- und eine Messung des Drucks des Reifens (PPM) nach der Landung, die auf diesen Flug folgt, nach Abschaltung der Motoren des Luftfahrzeugs, zu dem 3. Zeitpunkt (t₃).

12. Verfahren nach Anspruch 11, wobei der Zeitpunkt (t₃) später als der Zeitpunkt ist, zu dem der Druck des Reifens maximal ist, nach der Landung.

13. Vorrichtung zum Abschätzen des Zustands oder des Drucks eines Reifens eines Luftfahrzeugs, umfassend:
- mindestens einen Sensor zur Messung des Drucks (P1, P2) in dem Reifen, während eines gleichen Flugs und/oder nach der Landung, die auf diesen Flug folgt, zu einem 1. Zeitpunkt (t₁, t₄) und dann zu einem 2. Zeitpunkt (t₂, t₅),
- Mittel (50), die dazu programmiert sind, anhand dieser Daten Eingangsdaten für ein Abschätzungsmodell zu bilden, welches mindestens ein Ausgangsdatenelement bereitstellt, das für den Zustand des Reifens oder den Druck in dem Reifen zu einem 3. Zeitpunkt (t₃), der später als der 2. Zeitpunkt (t₂, t₅) ist, repräsentativ ist,
**dadurch gekennzeichnet, dass** sie
einen Sensor für mindestens einen der folgenden Parameter umfasst, die als Eingangsdaten für das Abschätzungsmodell verwendet werden:
- die mittlere Rotationsgeschwindigkeit und/oder die Anzahl von Rotationen des Rades, nachdem das Luftfahrzeug den Boden berührt hat und vor der Abschaltung der Motoren des Luftfahrzeugs;
- mindestens eine Messung der Außentemperatur und eine Messung des Drucks des Reifens während des Flugs;
- mindestens eine Temperatur der Felge, auf der der Reifen montiert ist, vorzugsweise zu einem Zeitpunkt der Messung des Drucks des Reifens;
- den maximalen Wert des Drucks des Reifens (PPMAX) nach dem letzten Abheben,
- den Wert des Drucks des Reifens (PPA), wenn das Flugzeug eine vorgegebene Höhe, beispielsweise 800 Fuß, unterschreitet,
- die Zeit, die zwischen dem Zeitpunkt der Messung des Drucks (PPMAX) und dem Zeitpunkt der Messung des Drucks (PPA) verstrichen ist,
- die Verwendung oder Nichtverwendung eines Systems zur Kühlung der Bremsen.

## Claims

1. Method for estimating the state or pressure of an aircraft tyre, defined by the fact that:
- during the course of the one same flight and/or after the landing that follows this flight, physical data items characteristic at least of the pressure (PP1, PPMAX) in the tyre are measured at a 1st instant (t₁, t₄) and then at a 2nd instant (t₂, t₅),
- at least these measured data are used to form input data for an estimation model which supplies at least one output data item representative of the state of the tyre or of the pressure (PPM) in the tyre at a 3rd instant (t₃) subsequent to the 2nd instant (t₂, t₅)
and **characterized in that**
at least the brake temperature (BT2) of the brakes of the wheel associated with said tyre and the outside air temperature (OAT1) are also measured at each of the instants (t₁) and (t₂) .

2. Method according to Claim 1, wherein an alert signal is produced if at least one data item representative of the pressure at the 3rd instant (t₃) is below a predetermined threshold value.

3. Method according to one of Claims 1 or 2, wherein a signal is produced to indicate the need to reinflate the tyre or to indicate the need to change the tyre.

4. Method according to one of Claims 1 to 3, the instant (t₂) being prior to the instant at which the tyre pressure is at a maximum and/or the instant (t₃) being subsequent to the instant at which the tyre pressure is at a maximum.

5. Method according to one of Claims 1 to 4, comprising a previous step of learning the estimation model on the basis of several datasets, these being associated with at least 2 different earlier flights, each dataset including at least a tyre pressure measurement for said tyre and, possibly, for at least one other tyre, a measurement of the brake temperature (BT2) of the brakes associated with the wheel on which said tyre is mounted and, possibly, of the brake temperature (BT2) of the brakes associated with the wheel on which said at least one other tyre is mounted, and of the outside air temperature (OAT2), at instants (t₁), (t₂) and on the basis of tyre pressure measurement data measured at a 3rd instant (t₃), subsequent to (t₂, t₁), (t₂) and (t₃) corresponding to a state whereby the aircraft engines have been continuously stopped.

6. Method according to one of Claims 1 to 5, wherein the model input data further include one or more physical data items characteristic of at least one of the following parameters:
- the mean rotational speed and/or the number of rotations of the wheel, after the aircraft has touched down on the ground and before the aircraft engines have stopped;
- at least one outside air temperature and one tyre pressure during flight;
- at least one temperature of the rim on which the tyre is mounted, preferably at an instant at which the tyre pressure is measured;
- the maximum value of the tyre pressure (PPMAX) after the latest takeoff, at the 1st instant (t₄),
- the value of the tyre pressure (PPA) at the 2nd instant (t₅), which is the instant at which the aeroplane reaches or drops below a predetermined altitude of, for example, 800 ft,
- the time elapsed between the 1st instant at which the pressure (PPMAX) was measured and the 2nd instant at which the pressure (PPA) was measured,
- the use or non-use of a brake cooling system.

7. Method according to one of Claims 1 to 6, the 1st instant (t₄) and 2nd instant (t₅) being instants in the one same flight, the 1st instant (t₄) corresponding to a state of maximum tyre pressure after takeoff, the 2nd instant (t₅) corresponding to the aircraft, during the same flight, reaching or dropping below a predetermined altitude.

8. Method according to Claim 7, the 3rd instant (t₃) being an instant in the later flight or in the landing that follows this later flight.

9. Method according to Claim 7 or 8, the output data item representative of the state of the tyre at a 3rd instant (t₃) subsequent to the 2nd instant (t₅) being produced using, in addition, data measured during n (n > 1) preceding flights.

10. Method according to Claim 9, said data measured during n (n > 1) preceding flights including at least a state of maximum tyre pressure following takeoff in each of these preceding flights, and a pressure state, when the aircraft, during each of these preceding flights, reaches or drops below a predetermined altitude.

11. Method according to one of Claims 7 to 10, comprising a prior step of learning the model on the basis of several datasets which are associated with at least 2 different earlier flights, each dataset including at least:
- a measurement of the maximum tyre pressure (PPMAX) at the 1st instant (t₄) after takeoff;
- a measurement of the tyre pressure (PPA) when the aircraft, during the same flight, reaches or drops below a predetermined altitude, at the 2nd instant (t₅),
- and a measurement of the tyre pressure (PPM) after landing following this flight, after the aircraft engines have been stopped, at the 3rd instant (t₃).

12. Method according to Claim 11, the instant (t₃) being subsequent to the instant at which the tyre pressure is at a maximum, after landing.

13. Device for estimating the state or pressure of an aircraft tyre, comprising:
- at least one sensor for measuring the pressure (P1, P2) in the tyre, during the one same flight and/or after the landing that follows this flight, at a 1st instant (t₁, t₄) and then at a 2nd instant (t₂, t₅),
- means (50) programmed to use these data to form input data for an estimation model which supplies at least one output data item representative of the state of the tyre or of the pressure in the tyre at a 3rd instant (t₃) subsequent to the 2nd instant (t₂, t₅), **characterized in that** it
comprises a sensor that senses at least one of the following parameters used as input data for the estimation model:
- the mean rotational speed and/or the number of rotations of the wheel, after the aircraft has touched down on the ground and before the aircraft engines have stopped;
- at least one measurement of the outside air temperature and one measurement of the tyre pressure during flight;
- at least one temperature of the rim on which the tyre is mounted, preferably at an instant at which the tyre pressure is measured;
- the maximum value of the tyre pressure (PPMAX) after the latest takeoff,
- the value of the tyre pressure (PPA) when the aeroplane drops below a predetermined altitude of, for example, 800 ft,
- the time elapsed between the instant at which the pressure (PPMAX) was measured and the instant at which the pressure (PPA) was measured,
- the use or non-use of a brake cooling system.
